# EUROPÄISCHE PATENTSCHRIFT

(11) **EP 3 167 015 B1**
(45) Veröffentlichungstag und Bekanntmachung des Hinweises auf die Patenterteilung: **28.11.2018**
(21) Anmeldenummer: 15744506.5
(22) Anmeldetag: 13.07.2015
(51) Int. Cl.: C09D 5/00

(54) **PULVERFÖRMIGE ZUSAMMENSETZUNG UND BEHÄLTNIS FÜR DIESE ZUSAMMENSETZUNG**
PULVERULENT COMPOSITION AND CONTAINER FOR SAID COMPOSITION
COMPOSITION PULVÉRULENTE ET RÉCIPIENT POUR CETTE COMPOSITION

(30) Priorität: 11.07.2014 DE 102014109756
(43) Veröffentlichungstag der Anmeldung: 17.05.2017
(73) Patentinhaber: Gruber, Nico, 18551 Sagard auf Rügen (DE)
(72) Erfinder: Gruber, Nico, 18551 Sagard auf Rügen (DE)
(74) Vertreter: RGTH
(86) Internationale Anmeldenummer: PCT/EP2015/065981
(87) Internationale Veröffentlichungsnummer: WO 2016/005606

(56) Entgegenhaltungen:
- WO-A1-2013/113642
- DE-C1- 4 300 319
- US-A1- 2005 065 294
- 3M Deutschland GmbH: "3M PPS Lackverarbeitungssystem - Innovation, die entscheidet", 3M , AR-0079, 16. Mai 2006 (2006-05-16), XP002744562, Gefunden im Internet: URL:www.3M-autoreparatur.de [gefunden am 2015-09-16]
- 3M Automotive Aftermarket Division: "Improve Efficiency - Reduce Waste", 3M PPS Paint Preparation System, 60-4401-, 16. September 2010 (2010-09-16), XP002744563, Gefunden im Internet: URL:www.3M.com/pps [gefunden am 2015-09-16]

## Beschreibung

### Hintergrund

Die Erfindung betrifft eine pulverförmige Zusammensetzung zum Dispergieren und/oder Lösen in Wasser, welche 5 Gew.-% bis 98 Gew.-% Kreide sowie mindestens eine Substanz mit Wasserrückhaltevermögen und mindestens ein hydrophiles Additiv umfasst. Die Erfindung betrifft auch ein Behältnis für diese pulverförmige Zusammensetzung, welches mindestens einen Beutel umfasst, der mindestens eine Öffnung aufweist, die mit mindestens einem Verschlussmittel versehen ist. Insbesondere betrifft die Erfindung ferner die Verwendung der pulverförmigen Zusammensetzung beispielsweise als Spachtelmasse, Gießmasse, Anstrichmittel, Kosmetik- oder Wellnessprodukt.

### Stand der Technik

Aus der DE 10 2010 050 915 A1 sind Gebinde zur Aufnahme von flüssigen, pastösen oder pulverförmigen Zusammensetzungen bekannt. Das Gebinde umfasst einen Behälter aus Pappe oder Karton und einen Beutel, der sich innerhalb des Behälters befindet und zur Aufnahme der Zusammensetzungen vorgesehen ist. Zwischen dem Beutel und dem Behälter ist ein flüssigkeitsdichtes Trennelement angeordnet, wobei der Beutel insbesondere zur Aufnahme von flüssigen Anstrichmitteln vorgesehen ist.

Anstrichmittel bestehen üblicherweise aus flüssigen bis pastösen Zusammensetzungen, die auf Oberflächen aufgetragen einen physikalisch oder chemisch trocknenden Anstrich ergeben. Sie werden üblicherweise in Eimern aus Kunststoff oder in Dosen aus Blech verpackt. Herkömmliche Anstrichmittel enthalten grundsätzlich Bindemittel, Füllstoffe (z. B. Calciumcarbonat, Silikate oder Quarzmehl), Farbmittel oder Pigment, Wasser oder andere Lösungsmittel und optional Additive wie beispielsweise Verdickungsmittel, Dispergiermittel, Konservierungsmittel, Stabilisatoren oder Entschäumer. Als Bindemittel werden dabei häufig Öle, Acrylharze, Epoxidharze, Acrylat-Polymere, Polyurethan-Polymere, VinylacetatCopolymere (Polyvinylacetat), Casein, Cellulose und Kalk eingesetzt.

Darüber hinaus sind auch pulverförmige Anstrichmittel, Spachtelmassen und Gießmassen bekannt, wobei diese beispielsweise in Beutel und/oder Kartons verpackt werden. Solche sogenannten Pulver-Farben oder Pulver-Massen müssen aber aus dem Gebinde entnommen und in einem separaten Gebinde, meist Plastik, mit Wasser oder einem anderen Lösungsmittel vermischt und danach mittels eines einfachen Rührstabs oder eines Bohrmaschinen-Quirls aufgerührt werden. Daran schließt sich eine Quellzeit von 10 Minuten bis zwei Stunden an, wobei die Farbe bzw. Masse anschließend nochmals aufgerührt (durchgeschlagen) werden muss.

Als Verdickungsmittel enthalten die bisher bekannten Anstrichmittel, Spachtelmassen und Gießmassen üblicherweise Cellulosen (CMC, HEC, HPMC, HEMC, MC) mit Viskositäten größer 1.000 mPa*s, in der Regel von 5.000-100.000 mPa*s. Mittel bis Hochviskose Cellulosen (5.000-100.000 mPa*s) werden chemisch so aufbereitet, dass diese eine hohe Wasseraufnahmekapazität erzeugen. Hierdurch kann auch bei nur geringem Einsatz von Cellulose eine hohe Verdickungswirkung gewährleistet werden, so dass die Kosten insgesamt reduziert werden können. Mittel bis Hochviskose Cellulosen brauchen im basischen pH-Wert-Bereich von 6,5-7,5 eine längere Quellzeit, quellen dann stark auf und binden viel Wasser. D. h., ein kleines Körnchen Cellulose (z. B. 0,5 mm) quillt auf einen Cellulose-Klumpen in der Größe von ca. 2-5mm. Dieser Vorgang dauert einige Zeit und nach dem Quellvorgang muss mittels mechanischer Einwirkung (Rührstab, Mixer) das ganze Produkt noch homogenisiert werden. In diesem Homogenisierungsprozess werden die aufgequollenen Cellulose-Klumpen mit den anderen Inhaltsstoffen verrührt bis keine Klumpenbildung mehr vorhanden ist.

Aus der DE 20 2005 008677 U1 ist ein Beschichtungssystem zur farbgebenden Beschichtung von Oberflächen bekannt, das eine flüssige Grundmasse und mindestens ein Pigment in fester Form, das in der Grundmasse dispergierbar ist, umfasst. Das Pigment ist portioniert, beispielsweise zu Pellets oder Tabletten geformt, und in Flüssigkeit, insbesondere Wasser, dispergierbar. Darüber hinaus sind die Pigmente von einer flüssigkeitslöslichen, insbesondere wasserlöslichen, Umhüllung umgeben.

Aus der WO 2013/113 642 A1 ist ein Verfahren zur Ausbesserung der Oberflächen von Fahrzeugen und eine Beschichtung hierzu bekannt, die Kalk, Talkum (Magnesiumsilikat) und Ton (Aluminiumsilikat) umfasst und ein organisches Lösungsmittel enthält.

Die US 2005/065 294 A1 offenbart ein Pulver zur Herstellung elektrisch isolierender Beschichtungen. Die dort vorgeschlagene Beschichtung enthält Siliziumdioxyd als Füllstoff und wird beispielsweise mittels elektrostatischer Prozesse auf ein Substrat aufgetragen.

Aus der DE 43 00 319 C1 ist ein in Wasser lösliches Farbpulver bekannt. Dieses Farbpulver dient zur Herstellung einer Dispersionsfarbe, die bis zu 30% eines wasserlöslichen Kunstharzpulvers, 50-90% Rügen-Schlemmkreide und ggf. Zellulose, Titandioxyd sowie Dispergiermittel und Entschäumer aufweist.

Es ist auch ein Lackverarbeitungssystem bekannt, bei dem ein Einsatzbecher zum Mischen und Spritzen verwendet wird (3M PPS Lackverarbeitungssystem - Innovation, die entscheidet).
Ein Lackaufsprühsystem, bei dem in einem System gemischt, gemessen und gefiltert werden kann, ist als 3M PPS Paint Preparation System bekannt.

### Kurze Zusammenfassung der Erfindung

Es ist Aufgabe der Erfindung eine pulverförmige Zusammensetzung zu schaffen, die ohne weiteres Einwirken sofort nach Zugabe des Lösungsmittels einsatzfähig ist. Es ist ferner Aufgabe der Erfindung eine pulverförmige Zusammensetzung zu schaffen, welche als Anstrichmittel verwendet werden kann.

Erfindungsgemäß wird die Aufgabe durch eine pulverförmige Zusammensetzung der eingangs genannten Art gelöst, welche zusätzlich ein hydrophobes Additiv umfasst. Diese pulverförmigen Zusammensetzung kann beispielsweise als Spachtelmasse, Gießmasse, Anstrichmittel, Kosmetik- oder Wellnessprodukt verwendet werden. Die erfindungsgemäße Zusammensetzung, die einen Kreide-Anteil zwischen 5 Gew.-% und 98 Gew.-% aufweist, unterscheidet sich dabei in vorteilhafter Weise von bekannten Pulverfarben oder Pulver-Massen dadurch, dass sie nicht mehr durch starkes Rühren mittels Bohrmaschine und Quirl aufgerührt werden muss. Dieser Vorteil wird dadurch erreicht, dass die einzelnen Bestandteile mit einem hydrophoben Additiv versetzt werden. Für die weiteren Bestandteile und eventuell optionale Bestandteile der Zusammensetzung, wie das Weißpigment Titandioxyd, ist bei Zugabe von Wasser dann überraschender Weise kein besonderer Dispergierprozess mehr erforderlich. Darüber hinaus ist keine Quellzeit mehr notwendig bis das Produkt verarbeitungsfähig ist. Die erfindungsgemäße pulverförmige Zusammensetzung umfasst hydrophobes und amorphes Siliciumdioxid oder natürliches oder synthetisches (gefälltes) Aluminiumsilikat. Bisher wurde bei wasserverdünnbaren Farben ausschließlich mit hydrophilem Siliciumdioxid gearbeitet. Hydrophob verträgt sich nicht mit Wasser, stoßt es sogar völlig ab. Überraschender Weise hat sich aber herausgestellt, dass durch den kombinierten Einsatz von hydrophilen Additiven (z. B. hydrophiles amorphes Siliciumdioxid) und hydrophoben Additiven (z. B. hydrophobes amorphes Siliciumdioxid, hydrophobe Aluminiumsilikate, hydrophobe Calciumcarbonate oder Kaoline, etc.) die einzelnen Partikel in der Zusammensetzung voneinander getrennt bleiben, da jeder einzelne Bestandteil noch einen Restgehalt an Wasser besitzt. So enthält beispielsweise Calciumcarbonat noch 4 % Restfeuchte, Titandioxid 1-3 %, usw. Durch das Trennen der Partikel mittels eines hydrophoben Additivs bleiben die Partikel getrennt (kein Verkleben), während durch das hydrophile Additiv Kapillaren entstehen. Durch das Zusammenwirken beider Kräfte kann das zugesetzte Wasser überraschender Weise direkt an jeden einzelnen Partikel der Zusammensetzung gelangen, ohne dass Mixer eingesetzt werden müssen oder aufwendiges Rühren erforderlich ist. Die erfindungsgemäße Zusammensetzung verbindet sich mit dem Wasser fast von alleine, lediglich leichtes Kneten des Behältnisses beschleunigt die Verbindung, ist aber nicht absolut notwendig.

Erfindungsgemäß ist vorgesehen, dass das hydrophobe Additiv aus einer Gruppe ausgewählt ist, die aus hydrophobem amorphem Siliciumdioxid, Aluminiumsilikat, Calciumcarbonat, Talkum, Kaolin, Bentonit und sonstigen Silikat- u. Calciumverbindungen besteht. Dabei können beispielsweise natürliche oder synthetische (gefällte) Aluminumsilikate eingesetzt werden.

Erfindungsgemäß ist vorgesehen, dass die Substanz mit Wasserrückhaltevermögen aus einer Gruppe ausgewählt ist, die aus Cellulose, Cellulose-Derivaten, Xantan-Gum, Stärke, Stärke-Derivaten, Eiweiß-Polymeren und Eiweiß-Derivaten besteht.

In vorteilhafter Ausgestaltung der Erfindung ist vorgesehen, dass die Substanz mit Wasserrückhaltevermögen eine Viskosität von ungefähr 5 mPa*s bis ungefähr 5000 mPa*s aufweist. Die erfindungsgemäße pulverförmige Zusammenfassung kann also beispielsweise eine extrem niedrig viskose Cellulose umfassen, so dass deutlich mehr Cellulose benötigt wird, um die gleiche Verdickungswirkung zu erreichen. Das erhöht zwar die Kosten, bewirkt aber sofortige Quellung der Zusammensetzung unmittelbar nach Zugabe von Wasser. Die erfindungsgemäße Zusammensetzung ist also in vorteilhafter Weise ist sofort nach Zugabe des Wassers in der Endviskosität und somit auch verarbeitungsfähig. Zusätzlich hat der Einsatz von niedrig viskosen Substanzen mit Wasserrückhaltevermögen den Vorteil, dass auf den Einsatz von synthetischen Bindemitteln wie beispielsweise Acrylate verzichtet werden kann. Vorzugsweise wird dabei eine natürliche Hydroxypropylmethylcellulose (HPMC) eingesetzt, die pharmazeutisch geprüft und zugelassen ist. Das Ergebnis ist eine hoch ökologische Zusammensetzung von ausgezeichneter Qualität.

Durch den Einsatz von wasserrückhaltenden Substanzen, beispielsweise Cellulosen, Xantan-Gum, Stärke- und Eiweisspolymeren (pflanzlichen oder tierischen Ursprungs) und deren Derivaten, vorzugsweise einer natürlichen Hydroxypropylmethylcellulose (HPMC), kann in vorteilhafter Weise auch erreicht werden, dass die erfindungsgemäße Zusammensetzung einen höheren Weißgrad, eine verbesserte Rieselfähigkeit (welche zur Füllung in Glasverpackungen notwendig ist), ein längeres Wasserrückhaltevermögen (z. B. bei Gesichtspackungen und anderen Hautauftragungen, also keine kurze Austrocknung auf der Haut) und eine höhere Geschmeidigkeit aufweist sowie eine natürliche Rückfettung der Haut bewirkt. Hierdurch eignet sich die erfindungsgemäße Zusammensetzung auch als "Heilkreide" oder "Wellnesskreide" für kosmetische Anwendungen.

In weiterer vorteilhafter Ausgestaltung der Erfindung ist vorgesehen, dass diese zusätzlich Zement oder andere hydraulische Mineralbinder (Zemente) umfasst. Dadurch, dass die erfindungsgemäße Zusammensetzung in Pulverform vorliegt, kann problemlos Zement, vorzugsweise hydraulischer Weißzement, hinzufügt werden, ohne eine Zementreaktion (die nur bei Zusammentreffen mit Wasser abläuft) auszulösen. D. h., dass zusätzliche mineralische Bindekraft durch Zement gewährleistet ist und keine Einschränkung der Lagerfähigkeit vorliegt. Insbesondere Fassadenfarben können in vorteilhafter Weise ohne den Einsatz synthetischer Bindemittel zur Verfügung gestellt werden. Bei flüssigen Zusammensetzungen ist dagegen jeglicher Einsatz von Zement unmöglich, so dass ein hoher Einsatz von synthetischen Bindemitteln (PU, Acryl, PVA) erforderlich ist. Beim Einsatz von Zement ergibt sich als zusätzlicher Vorteil eine mineralgebundene Reaktion mit mineralischen Untergründen, so dass sich ein Anstrich mit zementären Inhaltsstoffen auf mineralischen Untergründen wesentlich fester und dauerhafter als ein Anstrich mit synthetischen Bindemitteln haftet.

In weiterer vorteilhafter Ausgestaltung der Erfindung ist vorgesehen, dass diese mindestens ein organisches Bindemittel umfasst. Als organische Bindemittel können beispielsweise Stärke und/oder Eiweißprodukte zugegeben werden.

In weiterer vorteilhafter Ausgestaltung der Erfindung ist vorgesehen, dass diese zusätzlich mindestens ein Pigment oder Farbmittel umfasst. Als Pigment für Weiß kann beispielsweise Titandioxid oder Zinkoxyd eingesetzt werden. Zum Einfärben der erfindungsgemäßen Zusammensetzung können alle bekannten und üblichen Pigmente und Farbmittel verwendet werden. Beispielsweise kann auch ein photokatalytisches Pigment verwendet werden, vorzugsweise photokatalytisches Titan(IV)-oxid (Titandioxid, TiO₂). Bei der Photokatalyse reagieren gasförmige oder gelöste Stoffe per Radikalreaktion oder Ladungsträgerübergang an Titandioxid oder anderen Stoffen unter UV-Beleuchtung. Titandioxid kann beispielsweise zur photokatalytischen Selbstreinigung verwendet werden oder zum Abbau von Stickoxyden (NOₓ) beitragen.

In besonders vorteilhafter Ausgestaltung der Erfindung dabei vorgesehen, dass das Pigment oder Farbmittel in einer Kapsel eingeschlossen, collagriert, agglomeriert oder granuliert ist, wobei diese kompakte Verbindung von einzelnen Pigmentteilchen bei Kontakt mit Wasser für das Pigment oder Farbmittel durchlässig wird, bzw. aufplatzt. Beispielsweise kann ein spezielles oberflächenbehandeltes kugelförmiges Pigment verwendet werden, welches in Verbindung mit Wasser sofort aufplatzt und dann das Pigment oder Farbmittel freisetzt. Die augenscheinliche pulverförmige Zusammensetzung ist also optisch zunächst völlig weiß. Gibt man aber Wasser dazu, springen die Kapseln auf und die freigesetzten Pigmente färben die nun flüssige oder pastöse Zusammensetzung unmittelbar. So liegt beispielsweise beim Einsatz von gekapselten Pulverpigmenten ein optisch "weißes" Produkt in Pulverform vor, das erst nach Zugabe von Wasser seinen Endfarbton binnen Sekunden annimmt. Solche gekapselten, vorgranulierten, collagierten und/oder agglomerierten Pigmente sind in der DE 20 2005 008677 U1 ausführlich beschrieben.

In weiterer vorteilhafter Ausgestaltung der Erfindung ist ferner vorgesehen, dass diese zusätzlich mindestens ein Hohlraumelement umfasst. Bei diesen Hohlraumelementen kann es sich beispielsweise um Hohlraumkugeln (z. B. aus Keramik, Kunststoff oder Glas) handeln, welche der erfindungsgemäßen pulverförmigen Zusammensetzung in vorteilhafter Weise zusätzlich eine Wärmeschutzwirkung verleihen und darüber hinaus die Schüttdichte der Zusammensetzung verringern.

Bei flüssigen Farben, Spachtelmassen und sonstigen Anstrichstoffen werden durch den scheerintensiven Dispergierprozess mittels leistungsstarker Mischaggregate bereits Teile der Hohlraumelemente durch "Zerhacken" zerstört. Bei pulverförmigen Produkten ist diese Scheerwirkung wesentlich geringer, da die Hohlraumelemente nicht flüssig "eindispergiert" werden müssen, sondern bereits minimalstes Mischen binnen Sekunden ausreicht, um die Elemente im Pulver zu verteilen.

Die Erfindung betrifft ferner die Verwendung der pulverförmigen Zusammensetzung beispielsweise als Spachtelmasse, Gießmasse, Anstrichmittel, Kosmetik- oder Wellnessprodukt.

Zur Lösung der Aufgabe trägt auch ein Behältnis der eingangs genannten Art bei, bei dem das Verschlussmittel mindestens ein siebartiges Trennelement umfasst, wobei das Trennelement im Bereich der Öffnung das innere Volumen des Beutels von der äußeren Umgebung trennt. Durch das siebartige Trennelement können beim Entnehmen der gebrauchsfertigen Zusammensetzung Klumpen und Verunreinigungen im Behältnis zurückgehalten werden, so dass ein sehr homogenes Produkt zur Verarbeitung zur Verfügung steht.

Zur Lösung der Aufgabe trägt ferner ein Behältnis der eingangs genannten Art bei, bei dem die Öffnung und/oder das Verschlussmittel mit mindestens einer Ventileinrichtung und/oder mindestens einem integrierten Kavitationskanal versehen ist/sind, so dass ein kontrolliertes Befüllen und/oder Entleeren des Behältnisses zu gewährleistet ist. Im Verschlussmittel kann beispielsweise zum sicherheitstechnischen "Nachdispergieren per Hand" ein Verschlussmittel verwendet werden, in welchem während des Ausgießprozesses aus dem Behältnis eine physikalische Kavitation erzeugt wird.

Bislang werden Pulverprodukte in Beutel (in der Regel Papiersäcke) gefüllt welche "einfach" zu befüllen sind, d. h. die dementsprechend große Füllöffnungen haben, durch die das Pulver relativ einfach eingefüllt werden kann. Aufgrund der besonders vorteilhaften Eigenschaften der erfindungsgemäßen Zusammensetzung in Bezug auf die Rieselfähigkeit kann diese auch in Behältnisse (z. B. Kunststoffbeutel) mit kleineren Öffnungen eingefüllt werden. Das hat den Vorteil, dass die Zugabe des Lösungsmittels (z. B. Wasser) in der Verpackung erfolgen kann, so dass das Produkt gebrauchsfertig gemacht werden kann, ohne die pulverförmige Zusammensetzung aus dem Verpackung in ein anderes Behältnis überführen zu müssen. Durch einfaches Auffüllen von Wasser in beispielsweise einen Beutel, in welchem sich bereits das zubereitete Pulver befindet, vorzugsweise in einem einfachen Mischungsverhältnis von 1:1 (1 kg fertige Pulvermischung zu 1 L klarem Wasser), sind bereits die Grundschritte vollzogen. Verschlussmittel (z. B. Kappe) wieder aufdrehen und die Masse per Hand 2-3 mal leicht durchmassieren - fertig ist das Endprodukt und sofort verarbeitungsfähig. Aus dem Beutel ist einfaches Dosieren der jeweiligen Bedarfsmenge in jedes beliebige Gebinde möglich.

Man kann also mit der erfindungsgemäßen Zusammensetzung extrem sauber arbeiten. Die Kombination von kleinem umweltfreundlichen Verschlussmittel und direktes Anmischen des Produktes im Beutel bedeutet ca. 70 % weniger Plastikabfall im Vergleich zum marktüblichen Plastikeimer.

Mittels des Verschlussmittels kann das Behältnis bei Nichtbenutzung wieder sicher und vorzugsweise luftdicht verschlossen werden. Vorzugsweise kann das Verschlussmittel in der Form eines Deckels ausgeführt sein, der auf einen an die Öffnung des Behältnisses angeformten Ausguss aufschraubbar ist. So kann beispielsweise die Haltbarkeit von Restmengen von Anstrichmitteln deutlich gesteigert werden. Die Haltbarkeit von Restmengen in den Anstrichmitteln, ohne Zugabe von Bioziden oder Konservierungsmitteln, kann auch durch die höher eingestellte Alkalität des Pulverproduktes mittels Kalk oder Zement über Monate verlängert werden. Eine Zementreaktion wird durch den unüblich hohen Anteil von wasserrückhaltenden Substanzen (z. B. Cellulosen, Xantan-Gum, Stärke- u. Eiweisspolymere oder deren Derivate) über Wochen verzögert.

"Kreide" im Sinne der Erfindung bezeichnet gemahlene feinkörnige Kalksteine, die im Wesentlichen aus Calcit (CaCO₃) bestehen. Erfindungsgemäß bevorzugt ist Kreide aus Vorkommen auf der Insel Rügen in Norddeutschland.

"Schlämmkreide" im Sinne der Erfindung bezeichnet Kreide, die durch Schlämmen, Mahlen und Sieben von Verunreinigungen befreit wurde.

"Cellulose-Derivate" im Sinne der Erfindung bezeichnet Cellulosen (Poly-β-D-Glucose, (C₆H₁₀O₅)_{[n]}), die durch Substitution und/oder chemische Reaktion modifiziert wurden. So ist beispielsweise auch die Hydroxypropylmethylcellulose (HPMC) ein CelluloseDerivat im Sinne der Erfindung, da sie ein Gemisch aus verschiedenen teilweise alkylsubstituierten Cellulosen ist.

"Weißzement" im Sinne der Erfindung bezeichnet Zement aus der Gruppe der Portlandzemente, der sich durch seinen geringen Eisenoxidgehalt auszeichnet. Weißzement wird aus sehr eisenarmen Rohstoffen hergestellt (Fe₂O₃-Gehalt unter 0,1%).

Die Erfindung wird im Folgenden anhand der Ausführungsbeispiele und Figuren beispielhaft näher erläutert.

### Beschreibung beispielhafter und bevorzugter Ausführungsformen der Erfindung

**Figur 1** zeigt ein erfindungsgemäßes Behältnis mit Verschlussmittel und
**Figur 2** zeigt das Verschlussmittel gemäß Figur 1 in vergrößerter Ansicht.

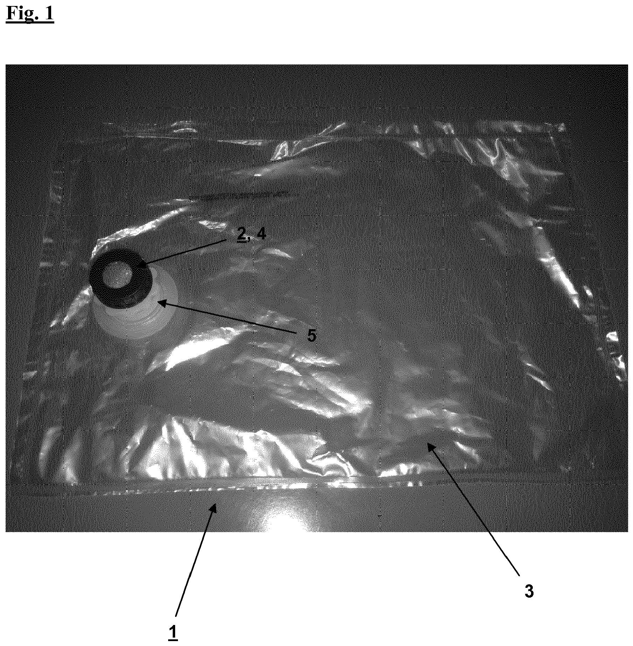

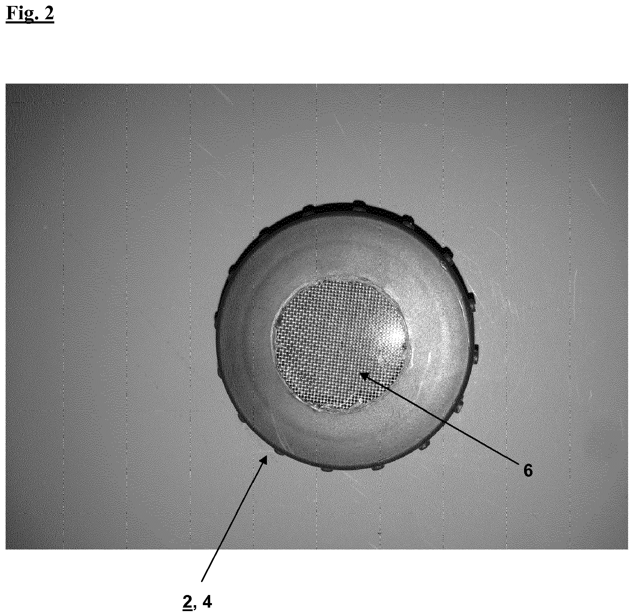

Aus den **Figuren 1** **und** **2** wird deutlich, dass das Behältnis 1 mittels des Verschlussmittels 2 bei Nichtbenutzung wieder sicher und vorzugsweise luftdicht verschlossen werden kann. Vorzugsweise kann das Behältnis 1 in der Form eines Beutels 3 ausgeführt sein. Vorzugsweise kann das Verschlussmittel 2 in der Form eines Deckels 4 ausgeführt sein, der auf einen an die Öffnung des Behältnisses 1 angeformten Ausguss 5 aufschraubbar ist. Das Verschlussmittel 2 weist ein siebartiges Trennelement 6 auf, welches das innere Volumen des Beutels 3 von der äußeren Umgebung trennt.

Eine erfindungsgemäße Spachtelmasse kann beispielsweise die in Tabelle 1 angegebene Zusammensetzung haben:

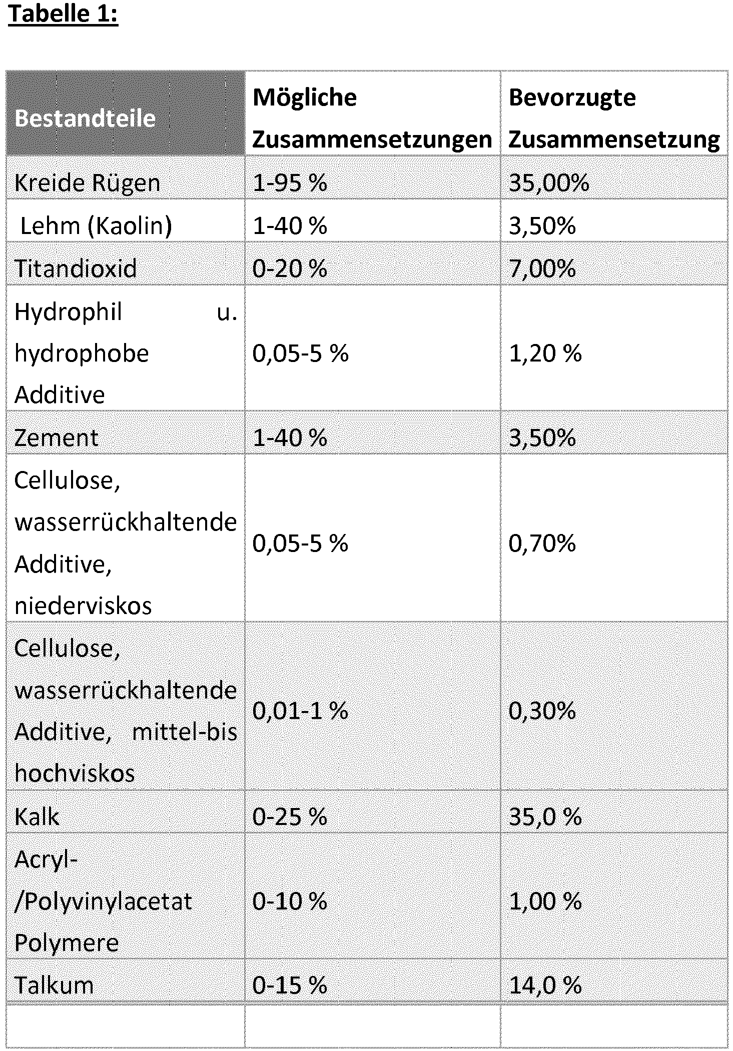

Ein erfindungsgemäßes Anstrichmittel kann beispielsweise die in Tabelle 2 angegebene Zusammensetzung haben:

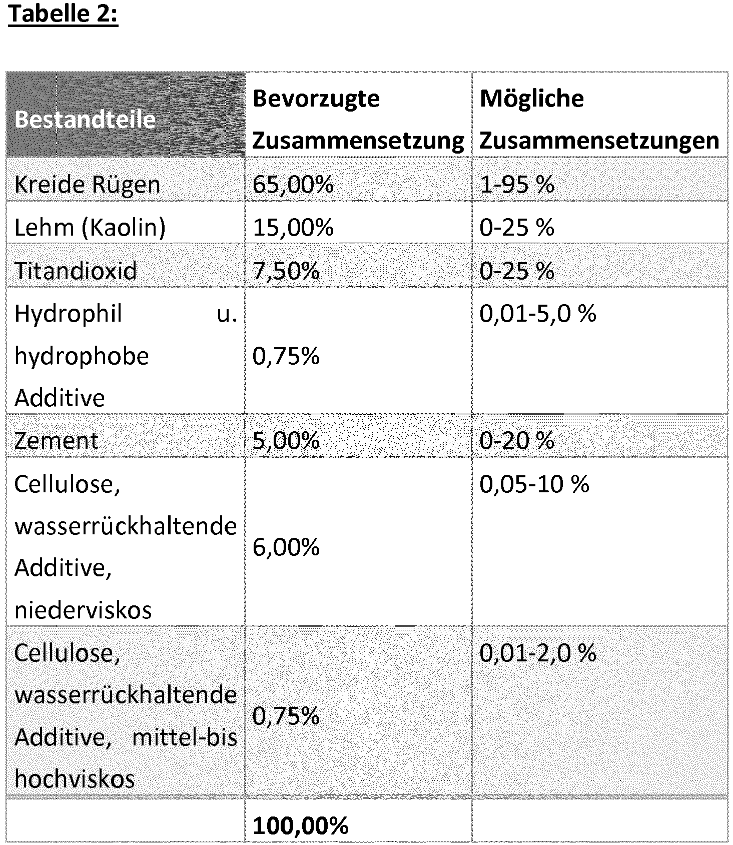

Ein erfindungsgemäßes Wellnessprodukt ("Heilkreide") kann beispielsweise die in Tabelle 3 angegebene Zusammensetzung haben:

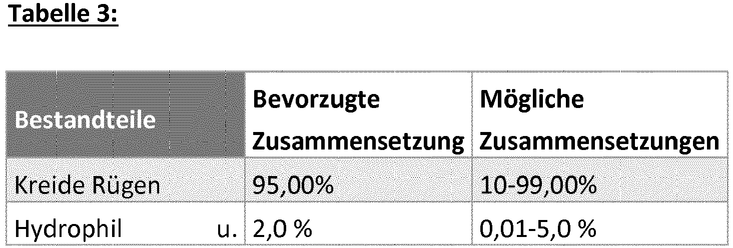

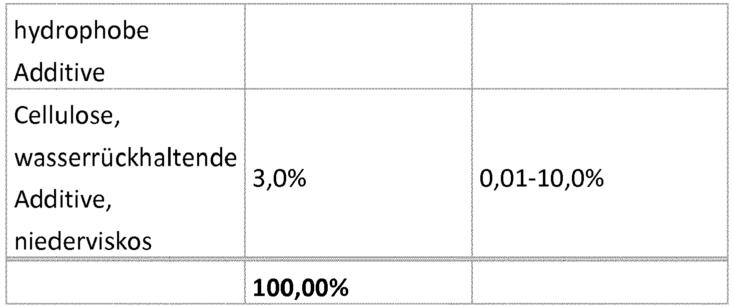

Durch die die hydrophoben Additive wird die Rieselfähigkeit der Zusammensetzung signifikant verbessert, so dass diese problemlos in Flaschen oder ähnliche Behältnisse gefüllt und aus diesen auch wieder entnommen werden kann. Zusätzlich hat der Einsatz von niedrig viskosen Substanzen mit Wasserrückhaltevermögen den Vorteil, dass auf den Einsatz von synthetischen Bindemitteln wie beispielsweise Acrylate oder andere technisch verbessernde Additive verzichtet werden kann, so dass eine hoch ökologische Zusammensetzung mit sehr guter Hautverträglichkeit entsteht, die auf der Haut lange feucht bleibt und nicht schnell austrocknet.

Zusätzlich zu oben genannten Rezepturmöglichkeiten bieten sich weitere hautpflegende Inhaltsstoffe an: Ziegenbuttercreme, Stutenmilchpulver, Vanille- und Kräuterzusätze, Salzzusätze etc., die Bandbreite natürlicher Proteine, Eiweiße, Enyzme und Öle enthaltender gesättigter Fettsäuren, ungesättigter Fettsäuren sowie mehrfach gesättigter Fettsäuren, sowie Öle welche insbesondere Anteile von Ölsäuren, Palmetinsäuren, Stearinsäuren, Linol- und Linolensäuren enthalten.

Zusätzlich zu oben genannten Rezepturmöglichkeiten können Riech- und Aromastoffe hinzugefügt werden, insbesondere:
- Lavendel, Rosen, Kümmel, Eukalyptus, Vanille, Zitruspflanzen
- Phenole
- Alkohole
- Ätherische Öle

Eine erfindungsgemäße Gießmasse kann beispielsweise die in Tabelle 4 angegebene Zusammensetzung haben:

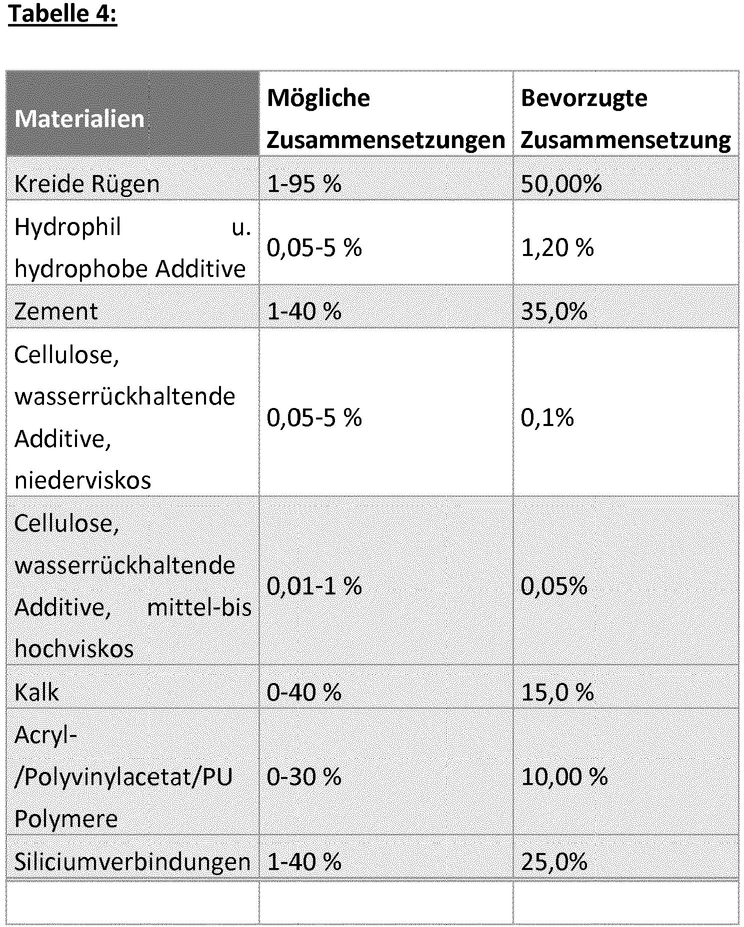

Additive zur Wasserrückhaltung können sein: (Cellulosederivate, Xantan-Gum, Stärke-/Eiweisspolymer und Derivate hieraus, etc.)

Die erfindungsgemäße Gießmasse kann also in vorteilhafter Weise einen Kreideanteil (CaCO₃) von mehr als 5 Gew.-% aufweisen. Insbesondere bei Gießmassen kann somit Gips durch Kreide ersetzt werden. Normalerweise werden Gießmassen nämlich aus Gips hergestellt. Das hat viele Nachteile, da Gips nicht wasser- oder wetterfest ist.

Gips ist darüber hinaus meistens auch kein natürlicher Rohstoff, sondern ist ein Abfallnebenprodukt welches bei der Rauchgasentschwefelung von Kohlekraftwerken anfällt. Weiter ist Gips von der Kornstruktur her mit Kornverteilungen von 5-20 µm wesentlich größer als Schlämm-Kreide mit Kornverteilung von 1,5-6 µm. Detailgetreuere Abgussformen lassen sich mit Schlämmkreide (CaCO₃) detailierter abformen. Ein Nachteil von Schlämmkreide (CaCO₃) gegenüber Gips ist die Trockenzeit zur Aushärtung. Daher kann auf den Einsatz von hydraulischen Bindern wie z. B. Zement bei einer beabsichtigten Trockenzeit von unter 3 Tagen nicht verzichtet werden. Längere Trockenzeiten ermöglichen eine starke Reduzierung von Zement. Die fertige Gießmasse auf Basis von Schlämmkreide CaCO₃ sowie zementären Bestandteilen ermöglicht Abgussformen welche wasser- und wetterfest sind.

In allen Fällen ist der Einsatz von Keramikkugeln und "Glasbubbles" oder anderen Hohlraumelementen im Bereich von 1-30 Gew.-% möglich.

## Patentansprüche

1. Pulverförmige Zusammensetzung zum Dispergieren und/oder Lösen in Wasser, welche 5 Gew.-% bis 98 Gew.-% Kreide sowie mindestens eine Substanz mit Wasserrückhaltevermögen und mindestens ein hydrophiles Additiv umfasst, wobei die Substanz mit Wasserrückhaltevermögen aus einer Gruppe ausgewählt ist, die aus Cellulose, Cellulose-Derivaten, Xantan-Gum, Stärke, Stärke-Derivaten, Eiweiß-Polymeren und Eiweiß-Derivaten besteht, **dadurch gekennzeichnet, dass** diese zusätzlich ein hydrophobes Additiv umfasst, das aus einer Gruppe ausgewählt ist, die aus hydrophobem amorphem Siliciumdioxid, Aluminiumsilikat, Calciumcarbonat, Talkum, Kaolin, Bentonit und sonstigen Silikat- u. Calciumverbindungen besteht.

2. Zusammensetzung nach Anspruch 1, **dadurch gekennzeichnet, dass** die Substanz mit Wasserrückhaltevermögen eine Viskosität von ungefähr 5 mPa*s bis ungefähr 5000 mPa*s aufweist.

3. Zusammensetzung nach Anspruch 1 oder 2, **dadurch gekennzeichnet, dass** diese zusätzlich Zement umfasst.

4. Zusammensetzung nach einem der Ansprüche 1 bis 3, **dadurch gekennzeichnet, dass** diese zusätzlich mindestens ein Pigment oder Farbmittel umfasst, vorzugsweise ein photokatalytisches Pigment.

5. Zusammensetzung nach Anspruch 4, **dadurch gekennzeichnet, dass** das Pigment oder Farbmittel in einer Kapsel eingeschlossen, collagriert, agglomeriert oder granuliert ist, wobei diese kompakte Verbindung von einzelnen Pigmentteilchen bei Kontakt mit Wasser für das Pigment oder Farbmittel durchlässig wird.

6. Zusammensetzung nach einem der Ansprüche 1 bis 5, **dadurch gekennzeichnet, dass** diese zusätzlich mindestens ein Hohlraumelement umfasst.

7. Behältnis für die Zusammensetzung nach einem der Ansprüche 1 bis 6, welches mindestens einen Beutel umfasst, der mindestens eine Öffnung aufweist, die mit mindestens einem Verschlussmittel versehen ist, **dadurch gekennzeichnet, dass** das Verschlussmittel mindestens ein siebartiges Trennelement umfasst, wobei das Trennelement im Bereich der Öffnung das innere Volumen des Beutels von der äußeren Umgebung trennt.

8. Behältnis für die Zusammensetzung nach einem der Ansprüche 1 bis 6, welches mindestens einen Beutel umfasst, der mindestens eine Öffnung aufweist, die mit mindestens einem Verschlussmittel versehen ist, **dadurch gekennzeichnet, dass** die Öffnung und/oder das Verschlussmittel mit mindestens einer Ventileinrichtung und/oder mindestens einem integrierten Kavitationskanal versehen ist/sind.

## Claims

1. Pulverulent composition for dispersion and / or dissolution in water, which comprises 5% by weight to 98% by weight of chalk as well as at least one substance having water retention capacity and at least one hydrophilic additive, wherein the substance having water retention capacity is selected from a group consisting of cellulose, cellulose derivatives, xanthan gum, starch, starch derivatives, protein polymers and protein derivatives, **characterized in that** it additionally comprises a hydrophobic additive, which is selected from a group consisting of hydrophobic amorphous silica, aluminum silicate, calcium carbonate, talc, kaolin, bentonite and other silicate and calcium compounds.

2. Composition according to claim 1, **characterized in that** the substance having water retention capacity has a viscosity of from about 5 mPa·s to about 5000 mPa·s.

3. Composition according to claims 1 or 2, **characterized in that** it additionally comprises cement.

4. Composition according to one of claims 1 to 3, **characterized in that** it additionally comprises at least one pigment or colorant, preferably a photocatalytic pigment.

5. Composition according to claim 4, **characterized in that** the pigment or colorant is enclosed, collaged, agglomerated or granulated in a capsule, wherein this compact compound of individual pigment particles becomes permeable to the pigment or colorant on contact with water.

6. Composition according to one of claims 1 to 5, **characterized in that** it additionally comprises at least one cavity element.

7. Container for the composition according to one of claims 1 to 6, which comprises at least one bag, which comprises at least one opening, which is provided with at least one closure means, **characterized in that** the closure means comprises at least one sieve-like separating element, wherein the separating element separates the inner volume of the bag from the external environment in the region of the opening.

8. Container for the composition according to one of claims 1 to 6, which comprises at least one bag, which has at least one opening, which is provided with at least one closure means, **characterized in that** the opening and / or the closure means is / are provided with at least one valve means and / or at least one integrated cavitation channel.

## Revendications

1. Composition pulvérulente, destinée à être dispersée et/ou dissoute dans de l'eau, laquelle comprend de 5 % en poids à 98 % en poids de craie, ainsi qu'au moins une substance faisant preuve d'un pouvoir de rétention d'eau et au moins un additif hydrophile, la substance avec pouvoir de rétention d'eau étant choisie dans un groupe constitué de la cellulose, de dérivés de la cellulose, de la gomme de xanthane, de l'amidon, de dérivés d'amidon, de polymères de protéines et de dérivés de protéines, **caractérisé en ce qu'**elle comprend en supplément un additif hydrophile, qui est choisi dans un groupe qui est constitué de dioxyde de silicium amorphe hydrophobe, de silicate d'aluminium, de carbonate de calcium, de talc, de kaolin, de bentonite et d'autres composés de silicate et de calcium.

2. Composition selon la revendication 1, **caractérisée en ce que** la substance à pouvoir de rétention d'eau fait preuve d'une viscosité d'environ 5 mPa*s à environ 5000 mPa*s.

3. Composition selon la revendication 1 ou 2, **caractérisée en ce qu'**elle comprend en sus du ciment.

4. Composition selon l'une quelconque des revendications 1 à 3, **caractérisée en ce que** qu'elle comprend en sus un pigment ou un colorant, de préférence un pigment photo-catalytique.

5. Composition selon la revendication 4, **caractérisée en ce que** le pigment ou le colorant est scellé dans une capsule, collé, aggloméré ou granulé, lors du contact avec de l'eau, ledit composé compact de particules de pigment individuelles étant perméable au pigment ou au colorant.

6. Composition selon l'une quelconque des revendications 1 à 5, **caractérisée en ce qu'**elle comprend en sus au moins un élément à cavité.

7. Contenant pour la composition selon l'une quelconque des revendications 1 à 6, lequel comprend au moins un sachet qui présente au moins une ouverture qui est muni d'au moins un moyen de fermeture, **caractérisé en ce que** le moyen de fermeture comprend au moins un élément séparateur sous forme de tamis, dans la région de l'ouverture, l'élément séparateur séparant le volume intérieur du sachet de l'environnement extérieur.

8. Contenant pour la composition selon l'une quelconque des revendications 1 à 6, lequel comprend au moins un sachet qui est muni d'au moins une ouverture qui présente au moins un moyen de fermeture, **caractérisé en ce que** l'ouverture et/ou le moyen de fermeture est/sont muni(s) d'au moins un système de soupapes et/ou d'au moins un canal de cavitation intégré.
